(19) Europäisches Patentamt
European Patent Office
Office européen des brevets

(11) EP 3 835 280 A1

(12) EUROPÄISCHE PATENTANMELDUNG

(43) Veröffentlichungstag:
**16.06.2021 Patentblatt 2021/24**

(21) Anmeldenummer: **21155567.7**

(22) Anmeldetag: **08.09.2015**

(51) Int Cl.:
***C04B 26/06*** *(2006.01)* ***C04B 40/06*** *(2006.01)*
***C04B 26/10*** *(2006.01)* ***C04B 26/14*** *(2006.01)*
***C09J 4/00*** *(2006.01)* ***C09J 4/06*** *(2006.01)*
***C09J 163/00*** *(2006.01)* ***C09J 175/00*** *(2006.01)*
*C04B 111/00* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2014 DE 102014013800**
**13.08.2015 DE 102015113352**

(62) Dokumentnummer(n) der früheren Anmeldung(en) nach Art. 76 EPÜ:
**15401095.3 / 3 000 792**

(71) Anmelder: **fischerwerke GmbH & Co. KG**
**72178 Waldachtal (DE)**

(72) Erfinder:
- **Grün, Jürgen**
**79268 Bötzingen (DE)**
- **Vogel, Martin**
**79286 Glottertal (DE)**
- **Schmidt, Clemens**
**79211 Denzlingen (DE)**
- **Schlenk, Christian**
**79211 Denzlingen (DE)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

Bemerkungen:
Diese Anmeldung ist am 05-02-2021 als Teilanmeldung zu der unter INID-Code 62 erwähnten Anmeldung eingereicht worden.

# (54) BEFESTIGUNGSSYSTEME MIT FEINTEILIGEN FÜLLSTOFFEN

(57) Mehrkomponentiges Befestigungskunstmörtelsystem, insbesondere zum Befestigen von Verankerungselementen in Bausubstraten, welches in einer Komponente Reaktiv-Kunstharze auf (i) Urethan(meth)acrylatbasis, (ii) Epoxidharzbasis oder (iii) auf Basis radikalisch härtender (bzw. härtbarer) ungesättigter Reaktiv-Harze, in einer weiteren Komponente Härter und mindestens einen Füllstoff ausgewählt aus Oxiden von Silicium und Aluminium, oder Mischoxiden mit Gegenwart weiterer Kationen, dessen Mittelkorn d50 bei 50 μm oder weniger liegt, beinhaltet, sowie insbesondere ein Silan mit mindestens einer hydrolysierbaren Gruppe, sowie deren Verwendung, Verfahren unter deren Nutzung zum Befestigen von Verankerungselementen in Bausubstraten und verwandte Erfindungsgegenstände.

EP 3 835 280 A1

**Beschreibung**

Die Erfindung betrifft mehrkomponentige Befestigungskunstmörtelsysteme, insbesondere zum Befestigen von Verankerungselementen in Bausubstraten, welche in einer Komponente Reaktiv-Kunstharze auf (i) Urethan(meth)acrylatbasis (besonders bevorzugt), (ii) Epoxidharzbasis oder (iii) auf Basis radikalisch härtender (bzw. härtbarer) ungesättigter Reaktiv-Harze, in einer weiteren Komponente Härter beinhalten, wie unten näher dargelegt, sowie Verfahren zu deren Herstellung und deren Verwendung in der Befestigungstechnik, insbesondere zum Befestigen von Verankerungselementen in Bausubstraten, wie auch entsprechende Verfahren und Mehr-Komponenten-Kits.

Im Bauwesen sind Zuschlagstoffe in Form von partikulären Füllstoffen für die Verwendung in polymerbildenden chemischen Verankerungsmassen (manchmal auch als "chemische Dübel" bezeichnet) mit ein oder mehreren Komponenten, beispielsweise in Form von Zweikammerkartuschen oder Zweikammerpatronen, zum Befestigen von Verankerungselementen in Bohrlöchern bekannt. Oft wird der Art der Füllstoffe, sofern es sich nicht um solche handelt, die, wie Zement, selbst beispielsweise durch hydraulisches Abbinden zur Verfestigung beitragen, nicht sehr viel Bedeutung beigemessen. So erwähnt beispielsweise die EP 0 150 555 B1 ausdrücklich, die Art des Füllers sei nicht kritisch und eine Reihe von möglichen Füllstoffen wird genannt.

Eine permanente Aufgabe bleibt, solche derartige Befestigungssysteme bereitzustellen, die besonders gute Eigenschaften, wie hohe Zug- und Druckfestigkeit, zeigen und so den hohen Anforderungen insbesondere im Baubereich gewachsen sind.

Es wurde nun überraschend gefunden, dass bei Verwendung von Füllstoffen mit sehr kleiner Partikelgröße überraschend besonders gute Zug- und Druckfestigkeiten gegenüber solchen mit größeren Partikelgrößen erreicht werden können.

Die Erfindung betrifft daher in einer ersten Ausführungsform ein mehrkomponentiges Befestigungskunstmörtelsystem, insbesondere zum Befestigen von Verankerungselementen in Bausubstraten, welches in einer Komponente ein Reaktiv-Kunstharz auf (i) Urethan(meth)-acrylatbasis (besonders bevorzugt), (ii) Epoxidharzbasis oder (iii) auf Basis radikalisch härtender (bzw. härtbarer) ungesättigter Reaktiv-Harze, in einer weiteren Komponente Härter beinhaltet, dadurch gekennzeichnet, dass es mindestens einen Füllstoff ausgewählt aus Oxiden von Silicium (bevorzugt) und Aluminium, oder Mischoxiden mit Gegenwart weiterer Kationen, beinhaltet, dessen Mittelkorn d50 bei 50 µm oder weniger, insbesondere bei 40 µm oder weniger, vorzugsweise bei 30 µm oder weniger, vorteilhaft insbesondere bei 20 µm oder weniger, z.B. vorzugsweise bei 10 µm oder weniger, stark vorzugsweise bei 5 µm oder weniger, in erster Linie von 2,5 µm oder weniger, in allererster Linie von 1 µm oder weniger, liegt.

Auch die Verwendung der im vorstehenden Absatz (oder nahstehend) definierten mehrkomponentigen Befestigungskunstmörtelsysteme zum Befestigen von Verankerungselementen in einem Loch oder Spalt in einem Bausubstrat ist ein Gegenstand der Erfindung.

Auch Verfahren zur Befestigung von einem Verankerungselement in einem Loch oder Spalt in einem Bausubstrat, bei dem ein erfindungsgemäßes mehrkomponentiges Befestigungskunstmörtelsystem und ein Verankerungselement in das Loch oder den Spalt eingebracht und aushärten lassen werden, bilden einen Erfindungsgegenstand.

Schließlich bildet auch die Verwendung von mindestens einem Füllstoff ausgewählt aus Oxiden von Silicium (bevorzugt) und Aluminium, oder Mischoxiden mit Gegenwart weiterer Kationen, beinhaltet, dessen Mittelkorn d50 bei 50 µm oder weniger, insbesondere bei 40 µm oder weniger, vorzugsweise bei 30 µm oder weniger, vorteilhaft bei 25 µm oder weniger, z.B. vorzugsweise bei 20 µm oder weniger, stark vorzugsweise bei 10 µm oder weniger, in erster Linie von 5 µm oder weniger, in allererster Linie von 1 µm oder weniger, liegt, als Füllstoffe in einem mehrkomponentigen Befestigungskunstmörtelsystem wie oben und nachfolgend definiert zum Erhöhen der Verbundspannung gegenüber Füllstoffen mit größerem Mittelkorn eine Ausführungsform der Erfindung.

Vorteilhaft weist ein erfindungsgemäßes bzw. erfindungsgemäß verwendetes Befestigungskunstmörtelsystem ferner ein mindestens eine Si-gebundene hydrolysierbare Gruppe beinhaltendes Silan als Zusatz auf, oder die Füllstoffe sind vor ihrer Zugabe mit einem derartigen Silan modifiziert, wobei das Silan insbesondere ein solches ist, das bei der Polymerisation der Verankerungsmassen reaktive Gruppen (wie Epoxidgruppen oder Aminogruppen beispielsweise für entsprechende epoxybasierte Verankerungsmassen oder ferner olefinische Doppelbindungen, z.B. in (Meth)acrylatgruppen, für entsprechende radikalisch härtbare Verankerungsmassen), andererseits hydrolysierbare, an Si gebundene Gruppen, wie Alkoxy (z.B. mit 1 bis 7 Kohlenstoffatomen) oder Halogeno, wie Chloro, aufweisen beinhalten. Die Oberflächenmodifikation kann beispielsweise mit Silanen, die ein oder mehrere hydrolysierbare Gruppen, wie Alkoxy-, z.B. Methoxy- oder Ethoxy, am Siliciumatom gebunden enthalten, z.B. ausgewählt aus der Gruppe, die aus 3-Aminopropyltrialkoxysilanen, wie 3-Aminopropyl-trimethoxysilan oder 3-Aminopropyl-triethoxysilan, 3-Glycidyloxypropyltrialkoxysilanen (besonders bevorzugt bei Epoxybasierten Systemen), wie 3-Glycidyloxypropyltrimethoxysilan oder -ethoxysilan, Glycidyloxymethyltrimethoxysilan, 3-Glycidyloxypropylmethyldi-methoxysilan, Bis-(3-trialkoxysilylpropyl)amin, wie Bis-(3-trimeth-oxysilylpropyl)amin oder Bis-(3-triethoxysilylpropyl)amin, 3-Mercaptopropyltrialkoxysilan, wie 3-Mercaptopropyltrimethoxysilan, und (als besondere Variante, insbesondere bei auf Basis ungesättigter reaktiv-Kunstharze beruhenden Systemen)) 3-(Meth)acryloyl-oxypropyl-trialkoxysilanen, wie 3-(Meth)acryloyl-oxypropyltrimethoxysilan oder

-triethoxysilan oder 3-(Meth)acryloyl-oxymethyltrimethoxysilan oder -triethoxysilan, 3-(Meth)acryloyl-oxypropyl-methyldimethoxysilan und Alkenylalkoxysilane, wie Vinylalkoxysilane, z.B. Vinyltrimethoxysilan oder Vinyltriethoxysilan, und/ oder ferner in allen Ausführungsformen Tetraalkoxysilan, wie Tetraethoxysilan, Tetramethoxysilan oder Tetrapropoxysilan oder Alkoxypolysilikat (Ester der (Poly)kieselsäure), wie Ethyl- oder Propylpolysilikat; oder Gemische von zwei oder mehr davon, durchgeführt sein oder bei der Verwendung (z.B. zur Befestigung von Verankerungselementen) durchgeführt werden. Es können auch oligomeren Silane, wie in der Anmeldung DE 10 2014 109353.4 (Anmeldetag 4. Juli 2014) beschrieben, die hier durch Bezugnahme inkorporiert wird, eingesetzt werden oder durch Umsetzung mit (in das System eindiffundierendem oder Rest-) Wasser entstehen.

In besonderen Ausführungsformen der Erfindung sind das oder die mindestens eine Si-gebundene hydrolysierbare Gruppe beinhaltendes Silan als Zusatz, oder das oder die zum Modifizieren der Füllstoffe vor ihrer Zugabe verwendeten Silane insbesondere aus solchen ausgewählt, die bei der Polymerisation der Verankerungsmassen reaktive Gruppen (wie Epoxidgruppen oder Aminogruppen (beispielsweise für entsprechende epoxybasierte Verankerungsmassen) andererseits hydrolysierbare, an Si gebundene Gruppen, wie Alkoxy (z.B. mit 1 bis 7 Kohlenstoffatomen) oder Halogeno, wie Chloro, aufweisen, beinhalten. Solche Silane, die ein oder mehrere hydrolysierbare Gruppen, wie Alkoxy-, z.B. Methoxy- oder Ethoxy, am Siliciumatom gebunden enthalten, sind z.B. ausgewählt aus der Gruppe, die aus 3-Aminopropyltrialkoxysilanen, wie 3-Aminopropyl-trimethoxysilan oder 3-Aminopropyl-triethoxysilan, 3-Glycidyloxypropyltrialkoxysilanen (besonders bevorzugt bei Epoxybasierten Systemen), wie 3-Glycidyloxypropyltrimethoxysilan oder -ethoxysilan, Glycidyloxymethyltrimethoxysilan, 3-Glycidyloxypropylmethyldi-methoxysilan, Bis-(3-trialkoxy-silylpropyl)amin, wie Bis-(3-trimethoxysilylpropyl)amin oder Bis-(3-triethoxysilylpropyl)amin, und 3-Mercaptopropyltrialkoxysilan, wie 3-Mercaptopropyltrimethoxysilan, und/ oder ferner in allen Ausführungsformen Tetraalkoxysilan, wie Tetraethoxysilan, Tetramethoxysilan oder Tetrapropoxysilan oder Alkoxypolysilikat (Ester der (Poly)kieselsäure), wie Ethyl- oder Propylpolysilikat; oder Gemische von zwei oder mehr davon, durchgeführt sein oder bei der Verwendung (z.B. zur Befestigung von Verankerungselementen) durchgeführt werden.

Andererseits können in speziellen Ausführungsformen der Erfindungsgegenstände 3-(Meth)acryloyl-oxypropyltrialkoxysilanen, wie 3-(Meth)acryloyl-oxypropyltrimethoxysilan oder -triethoxysilan oder 3-(Meth)acryloyl-oxymethyltrimethoxysilan oder -triethoxysilan, 3-(Meth)acryloyl-oxypropylmethyldimethoxysilan oder ferner Alkenylalkoxysilane, wie Vinylalkoxysilane, z.B. Vinyltrimethoxysilan oder Vinyltriethoxysilan als derartige Silane bevorzugt sein,

Derartige Silane können auch mindestens einer Komponente eines Zwei- oder Mehr-komponenten-Befestigungskunstmörtelsystems als solche zugesetzt sein. Dann kann die Oberflächenmodifikation gegebenenfalls im Rahmen des Mischprozesses, der Lagerung und/oder der Durchmischung der Komponenten und der nachfolgenden Aushärtung bei der Befestigung erfolgen. Die Silane mit hydrolysierbaren Gruppen, können dann in einer erfindungsgemäß zu verwendenden Verankerungsmasse beispielsweise in einem Gewichtsanteil von 0,01 bis 50, insbesondere von 0,1 oder mehr Gew.-%, wie von 1 bis 30 Gew.-%, vorzugsweise von 2 oder mehr Gew.-%, wie von 2 bis 30 oder bis 15 Gew.-%, von 3 oder mehr Gew.-%, wie von 3 bis 20 oder bis 10 Gew.-%, noch stärker bevorzugt von 3,5 oder mehr Gew.-%, z.B. von 3,5 bis 20 oder bis 8 Gew.-%, vorgesehen sein.

Vor- und nachstehend können allgemeinere Begriffe oder Merkmale durch jeweils spezifischer (insbesondere nachfolgend) genannte Definitionen einzeln, zu mehreren oder alle ersetzt werden, was zu spezifischen, insbesondere bevorzugten, Ausführungsformen der Erfindung führt.

Das Mittelkorn d50 ist definiert als die Korngröße, bei der 50 Gew.-% der Teilchen kleiner ist als die angegebene Teilchengröße d50. Es gibt unterschiedliche und technisch allgemein anerkannte Verfahren zur Bestimmung der d50, z.B. mittels Sieblinienbestimmungen klassisch mit Sieben oder beispielsweise (insbesondere bei kleineren Partikeln mit unter 1 $\mu$m Durchmesser) durch Lasergranulometrie.

Die in den Beispielen genannten d50-Werte entsprechen Herstellerangaben.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein(e) oder mehr, z.B. zwei oder drei".

Vor- und nachstehend bedeuten Anteils- oder Gehaltsangaben in Prozent jeweils Gewichtsprozent ("Gew.-%") oder den relativen Gewichtsanteil, bezogen auf alle Inhaltsstoffe einer erfindungsgemäßen Harzzusammensetzung (ohne Verpackungsmaterial), wenn nicht anders angegeben oder ersichtlich.

"Und/oder" bedeutet, dass die genannten Merkmale/Substanzen jeweils alleine oder in Kombination von zwei oder mehr der jeweils genannten Merkmale/Substanzen vorliegen können.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

(Meth)acryl steht für Acryl, Methacryl oder Acryl und Methacryl (als Gemisch).

Oxide von Silicium (bevorzugt) oder Aluminium sind in erster Linie Siliciumdioxid (besonders bevorzugt) oder "Aluminiumoxid" ($Al_2O_3$). (Ferner vorhandene) Mischoxide sind vor allem Oxide hiervon in zusätzlicher Gegenwart von ein oder mehreren Oxiden ausgewählt aus Oxiden der Gruppe von Metallen, die insbesondere aus Calcium, Titan, Eisen, Natrium oder dergleichen besteht. Besonders bevorzugt sind Siliciumdioxid, insbesondere Quarz, Silikate, oder Aluminiumoxid, insbesondere $\alpha$-Aluminiumoxid. Oxide von Silicium oder Mischoxide von Silicium und Aluminium sind besonders bevorzugt, Oxide von Silicium noch mehr.

Ausgeschlossen sind insbesondere Gips, Kreide und Aluminiumhydroxide als einzige Füllstoffe, da bei diesen nach bisherigen Ergebnissen kein Einfluss der Teilchengröße zu finden ist.

Die Reaktiv-Kunstharze sind vorzugsweise wie folgt definiert:
(i) Beispiele für in besonderen und bevorzugten Ausführungsformen der Erfindung vorhandene bzw. verwendete Urethan(meth)acrylate in Reaktiv-Kunstharzen auf Urethanmethacrylatbasis ("Vinylesterurethane") in erfindungsgemäßen Befestigungskunstmörtelsystemen sind solche, die einerseits aus der Umsetzung eines vorverlängerten monomeren Di- oder Polyisocyanats und/oder andererseits aus der Umsetzung eines polymeren Di- oder Polyisocyanats (z.B.: PMDI, MDI) mit Hydroxyalkyl(meth)acrylat, wie Hydroxyethyl- oder Hydroxypropyl(meth)acrylat, resultieren. Die Art und Weise zur Durchführung von Vorverlängerungsreaktionen und die Vielzahl der Vorverlängerungsreaktionsmöglichkeiten sind dem Fachmann bekannt und werden hier nicht alle explizit beschrieben. Es sei hier beispielhaft auf die Anmeldungen EP 0508183 A1, EP 0432087 A1 und die noch nicht offengelegte Anmeldung vom 14.02.2014 mit der Anmeldungsnummer DE 10 2014 101 861.3 verwiesen.

Eine besondere Ausführungsform betrifft solche Urethan(meth)acrylatharze, die nach dem in der DE 10 2013 101 861.3 dargelegten Verfahren oder analog dazu hergestellt werden können (herstellbar sind oder insbesondere hergestellt werden), das nachfolgend kurz skizziert wird:
Es handelt sich um Verfahren zur Herstellung von Vinylesterurethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes ein Isocyanat mit einer mittleren Funktionalität von 2 oder niedriger oder insbesondere mehr als 2 (die auch durch Mischung von Isocyanaten einer Funktionalität unter zwei mit Isocyanaten einer Funktionalität größer 2 erzielt werden kann), beispielsweise von 2,0 oder insbesondere 2,1 bis 5, zum Beispiel von 2,2 bis 4, vorteilhaft z.B. von 2,3 bis 3,5, mit einem mindestens eine C-C-Doppelbindung (nicht konjugierte - olefinische Bindung) aufweisenden aliphatischen Alkohol, insbesondere einem Hydroxyalkyl(meth)acrylat, vorzugsweise Hydroxyniederalkyl(meth)acrylat, wie Hydroxyethyl(meth)acrylat oder insbesondere Hydroxypropyl(meth)acrylat, vorzugsweise 2-Hydroxypropylmethacrylat (HPMA), umgesetzt wird. Das technisch verfügbare HPMA ist dabei als eine Mischung aus 2-Hydroxypropylmethacrylat und Hydroxyisopropylmethacrylat zu sehen, - auch andere eine olefinische Bindung aufweisende aliphatische Alkohole können als technische Isomerengemische oder als reine Isomere vorliegen.

Unter einem Isocyanat mit einer mittleren Funktionalität von weniger als 2 oder 2 oder insbesondere mehr als 2, beispielsweise von 2,1 bis 5, zum Beispiel von 2,2 bis 4, vorteilhaft z.B. von 2,3 bis 3,5, ist beispielsweise ein Polyisocyanat mit Uretdion-, Isocyanurat-, Iminooxadiazinon-, Uretonimin-, Biuret-, Allophanat- und/oder Carbodiimid-Strukturen (vorteilhaft mit einer Molekulargewichtsverteilung derart, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)) oder vorzugsweise eine (z.B. in technischen Herstellprozessen typischerweise anfallende oder nachfolgend gezielt (z.B. durch Zugabe und/oder Abdestillation von Monomeren oder Monomerenmischungen) eingestellte) Mischung von (i) ein oder mehreren monomeren Mono- oder insbesondere Diisocyanaten, wie Diphenylmethandiisocyanat (MDI), insbesondere 4,4'-Diphenylmethyldiisocyanat oder 2,2'-Diphenylmethandiisocyanat oder Mischungen von Diphenylmethandiisocyanat-Isomeren (mit unterschiedlichen Positionen der Isocyanatgruppen an den Phenylkernen) wie den gerade genannten, mit (ii) ein oder mehreren "polymeren" Diphenylmethandiisocyanaten (PMDI), das heißt vorzugsweise Roh-MDI (Rohprodukt der industriellen Herstellung von MDI ohne Trennung der einzelnen Isomeren z.B. durch Destillation) mit (d.h. beinhaltend) mehreren Isomeren und höherfunktionellen Homologen und z.B. einem mittleren Molekulargewicht in der Größenordnung von 200 bis 800 g/mol und einer Funktionalität wie oben angegeben, z.B. mit einem mittleren Molekulargewicht von 280 bis 500, z.B. 310 bis 480 und einer Funktionalität von 2,4 bis 3,4, z.B. von 3,2. Bevorzugt sind marktübliche PMDI, die aus dem Roh-MDI selbst oder auch aus dem Roh-MDI z.B. durch Abdestillation und/oder Zugabe von monomerem MDI erhalten werden und ein mittleres Molekulargewicht von 310-450 aufweisen und auch Uretdion-, Isocyanurat-, Iminooxadiazinon-, Uretonimin-, Biuret-, Allophanat- und/oder Carbodiimid-Strukturen beinhalten können. Besonders bevorzugt sind marktübliche PMDI mit einer Molekulargewichtsverteilung derart, dass keine einzelne Molekülspezies zu mehr als 50 Gew.-% vorliegt.

Unter "Funktionalität" ist die Anzahl der Isocyanatgruppen pro Molekül zu verstehen, bei Diphenylmethandiisocyanat ist diese Funkionalität (im Wesentlichen, d.h. von verunreinigungsbedingten Abweichungen abgesehen) 2, bei den PMDI handelt es sich um eine (in der Regel vom Hersteller angegebene) mittlere Funktionalität, die gemäß der Formel

$$f = \frac{\sum n_i \cdot f_i}{\sum n_i}$$

($f$ = Funktionalität, $n_i$ = Zahl der Moleküle einer Funktionalität $f_i$,)
errechnet werden kann und vorzugsweise zwischen unter 2 oder 2 oder besonders bevorzugt über 2, beispielsweise 2,1 und 5,0 oder in den Bereichen wie oben angegeben liegt.

Das Verfahren zur Herstellung von Urethan(meth)acrylat-Harzen findet vorzugsweise in Gegenwart von einem Katalysator, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, , oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von *Stabilisatoren* (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butyl-brenzkatechin und/oder p-Benzochinon, sowie Mischungen von zwei oder mehr davon; z.B. in einer Menge von 0,0001 bis 2,5 Gew.-%, bezogen auf die Reaktionsmischung, statt, bei bevorzugten Temperaturen z.B. im Bereich von 0 bis 120 °C, vorteilhaft von 50 bis 95 °C. Beispiele für geeignete Katalysatoren und Stabilisatoren sind dem Fachmann bekannt, beispielsweise wie aus "Polyurethane Kunststoff-Handbuch 7" von Becker, G.W.; Braun, D.; Oertel, G., 3. Auflage, Carl Hanser Verlag, 1993, ersichtlich.

Die Reaktion kann ohne Lösungsmittel (der mindestens eine C-C-Doppelbindung aufwiesende aliphatische Alkohol, insbesondere das Hydroxy(nieder)alkyl(meth)acrylat selbst dient dann als Lösungsmittel) oder in Gegenwart eines geeigneten Lösungsmittels durchgeführt werden, beispielsweise eines weiteren Reaktivverdünners. "Reaktiv" bezieht sich dabei hier auf die Formulierung des Klebemittels und dessen Aushärtung, nicht auf die Addition des Alkohols an das Isocyanat.

Die Reaktion kann auch derart geführt werden, dass über eine Vorverlängerung ein Präpolymer gebildet und erst danach die noch übrigen Isocyanatgruppen mit dem mindestens eine C-C-Doppelbindung aufweisende aliphatische Alkohol, insbesondere dem Hydroxy(nieder)-alkyl(meth)acrylat, wie oben oder unten beschrieben umsetzt.

Für die Herstellung des Präpolymeren finden dabei zum Erzielen einer mittleren Isocyanat-Funktionalität von kleiner als zwei, zwei oder insbesondere größer als zwei die oben genannten Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung, oder es werden Isocyanate mit einer Funktionalität von 2 mit Polyolen, Polyaminen oder Aminolen mit einer mittleren OH- und/ oder Amino-Funktionalität von mehr als 2 eingesetzt.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder-1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder -O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere Hydrazin, N,N'-Dimethylhydrazin, aliphatische Di- oder Polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Das Verhältnis von freien Isocyanatgruppen des oder der Isocyanate zu Hydroxygruppen des oder der Hydroxyniederalkyl(meth)acrylate wird vorteilhaft derart gewählt, dass eine schnelle und vollständige Umsetzung der Isocyanatgruppen resultiert, das heißt, die Mol-menge der Hydroxygruppen (und damit die korrelierende Mol-Menge an Hydroxyniedera-Ikyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß . Überschüssiges Hydroxy-niederalkyl(meth)acrylat dient als Reaktivverdünner.

Die mittels des Verfahrens erhältlichen U(M)A-Harze sind solche, die erfindungsgemäß verwendbare bzw. vorhandene Urethan(meth)acrylatharze darstellen in den Reaktiv-Kunstharzen auf Urethan(meth)acrylatbasis.

"Auf Urethan(meth)acrylatbasis" bedeutet insbesondere, dass die erfindungsgemäßen Befestigungskunstmörtelsysteme neben den bisher genannten Bestandteile auch weitere übliche Bestandteile (z.B. Additive oder andere oben oder unten genannte Bestandteile) beinhalten können. Diese weiteren Bestandteile können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Bestandteile möglich.

Beispiele für weitere Inhaltsstoffe von Reaktiv-Kunstharzen auf Urethan(meth)acrylatbasis bzw. diese beinhaltenden Befestigungskunstmörtelsystemen sind hier metallsalzbasierte oder vorzugsweise aminische Beschleuniger, Inhibitoren, nicht reaktive Verdünner, reaktive Verdünner, Thixotropiermittel, weitere als die erfindungsgemäß eingesetzten Füllstoffe und/oder weitere Additive, oder Mischungen von zwei oder mehr dieser Inhaltsstoffe.

Als metallsalzbasierte Beschleuniger kommen Cu-, Co-, Mn-, Sn- oder Ce-Salze, wie z.B. Kupferoktanoat, in Frage. Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxypropyl-oder hydroxyethyl)-toluidinen oder -xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, ferner Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxy¬benzyl)-benzol, (nicht-alkylierte oder alkylierte) Brenzcatechine wie tert.-Butylbrenzcatechin, 3,5-Di-tert-butyl-1,2-benzoldiol oder, oder insbesondere 4-Methoxyphenol, oder Gemische von zwei oder mehr davon, in Frage. Diese haben vorzugsweise einen Anteil von bis zu 1 Gew.-%, insbesondere falls vorhanden zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetramethylpiperidin-4-ol ("4-OH-TEMPO" oder "TEMPOL"). Der Gewichtsanteil der nicht-phenolischen Inhibitoren liegt (falls vorhanden) vorzugsweise, bezogen auf die Reaktionsharzformulierung, im Bereich von 1 ppm (Gew. bezogen) bis 2 Gew.-%, insbesondere z.B. im Bereich von 5 ppm bis 1 Gew.-%.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-%.

Als Thixotropiermittel können übliche thixotropieverursachende Rheologiehilfsmittel verwendet werden, wie pyrogene Kieselsäure oder (z.B. mit Silanen) oberflächenbehandelte Kieselsäure. Sie können z.B. in einem Gewichtsanteil von 0,01 bis 50 Gew.-%, beispielsweise von 0,5 bis 20 Gew.-%, zugesetzt werden.

Als weitere neben den erfindungsgemäßen Füllstoffen einsetzbare Füllstoffe können ferner übliche Füllstoffe mit größerem Mittelkorn, insbesondere Kreiden, Quarzsand, Quarzmehl, Korund oder dergleichen, die als Pulver in körniger Form oder in Form von Formkörpern zugesetzt sein können, Verwendung, oder andere, wie Kern- oder Schalenmehle aus Pflanzen, was den biogenen Kohlenstoffanteil erhöht, wie Olivenkernmehl, Kokosnussschalenmehl oder ferner Walnussschalenmehl, oder auch hydraulische Füllstoffe, wie oben unter den Epoxiden beschrieben, oder Gemische davon, wobei die Füllstoffe ferner oder insbesondere auch silanisiert sein können. Die Füllstoffe können in einer oder in mehreren Komponenten eines erfindungsgemäßen mehrkomponentigen Befestigungskunstmörtelsystem, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können ferner hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Als weitere Füllstoffe können übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung finden, oder Gemische von zwei oder mehr davon, wobei die Füllstoffe ferner oder insbesondere auch silanisiert sein können.

Auch weitere Additive können zugesetzt sein, wie Weichmacher, nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner" können zusätzlich auch ein oder mehrere radikalisch härtende ungesättigte Reaktivverdünner in biogener oder nicht-biogener Form zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)-acrylate (einschließlich Hydroxyniederalkyl(meth)acrylaten, die auch aus der erfindungsgemäßen U(M)A-Harzherstellung bereits bei Überschuss als Reaktivverdünner beinhaltet sein können, wie Hydroxypropyl(meth)acrylat oder Hydroxy-ethyl(meth)acrylat, Alkyl-(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)-acrylat, Butandioldi(meth)acrylat, wie 1,3- oder insbesondere 1,4-Butandioldi(meth)acrylat, Hexandioldi(meth)acrylat, 1,10-Decandioldi(meth)acrylat, Diethylglykol-di(meth)acrylat, besonders bevorzugt Oligoalkylenglykoldi(meth)acrylate, wie in DE 10 2014 109355.0 (Anmeldetag 4. Juli 2014) beschrieben, die hier durch Bezugnahme aufgenommen wird, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocyclyl(meth)acrylate, worin Cycloalkyl oder Bicycloalkyl ferner substituiert sein kann und 5 bis 7 Ringkohlenstoffatome aufweist und Heterocyclyl 5 oder 6 Ringatome hat, ferner Substituenten tragen kann und 1 oder 2 Ringheteroatome ausgewählt aus N, O und S aufweist, wie Tetrahydrofurfuryl(meth)acrylat oder Isobornyl(meth)acrylat, oder Acetacetoxyalkyl(meth)acrylat; oder ferner Styrole, wie Styrol, $\alpha$-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile vorgesehen sein, beispielsweise (falls vorhanden) in einem Gewichtsanteil von 0,1 bis 90 Gew.-%, z.B. zwischen 10 und 80 Gew.-%, 30 bis 70 Gew.% oder 40 bis 60 Gew.-%, jeweils bezogen auf das Gesamtgewicht der Mischung aus Vinylesterurethanharz und Reaktivverdünner ohne Füllstoffe, aber ggf. mit anderen Zusätzen.

Bei den erwähnten radikalisch härtbaren Oligoalkylenglykoldi(meth)acrylaten handelt es sich insbesondere um solche der Formel I,

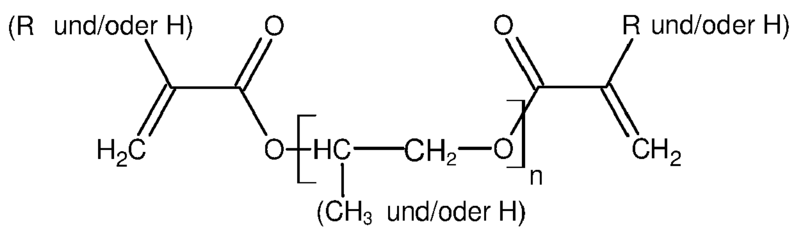

(I)

worin die Reste R unabhängig voneinander für $C_1$-$C_7$-Alkyl stehen, insbesondere für Methyl, und worin n für durchschnittlich 2,5 bis 13, vorzugsweise für 3,5 bis 10, insbesondere für 4 bis 8 und vor allem für 4,2 bis 7, insbesondere für 4,5 und 6 steht.

Beispiele für entsprechende Verbindungen sind insbesondere Triethylenglykoldi(meth)-acrylat (TIEGDMA), Tetraethylenglykoldi(meth)acrylat (TTEGDMA), Polyethylenglykol200-Di(meth)acrylat (PEG200DMA) (Mittelwert n $\approx$

4,5) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13).

(ii) Die bei der Verwendung von bzw. in erfindungsgemäßen Befestigungskunstmörtelsystemen verwendbaren bzw. vorgesehenen Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente han¬delt es sich vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin. Beispiele sind Trimethylolpropan-triglycidylether, Novolak-Epoxidharze, Bisphenol-A-Epichlorhydrinharze und/oder Bisphenol-F-Epichlor¬hydrinharze, beispielsweise mit einem durchschnittlichen Molekulargewicht von ≤ 2000. Die Epoxidharze können beispielsweise ein Epoxidäquivalent von 120 bis 2000, vorzugsweise 130 bis 400, wie insbesondere 155 bis 195, beispielsweise 165 bis 185 aufwiesen. Der Anteil der Epoxidkomponente des Befestigungskunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden (diese Verbindungen werden hier durch Bezugnahme aufgenommen).

"Auf Epoxidbasis" bedeutet insbesondere, dass die erfindungsgemäßen Befestigungskunstmörtelsysteme neben den bisher genannten Bestandteile auch weitere übliche Bestandteile (z.B. Additive oder andere oben oder unten genannte Bestandteile) beinhalten können.

Diese weiteren Bestandteile können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Bestandteile möglich.

Wichtige Beispiele für weitere Bestandteile sind ein oder mehrere ausgewählt aus Beschleunigern, reaktiven Verdünnern, Thixotropiermitteln, weiteren, neben den erfindungsgemäß vorhandenen bzw. verwendeten Füllstoffen und weiteren Additiven.

Als Beschleuniger können z.B. tert-Amine, wie Imidazole oder tert-Aminophenole, wie Tris-2,4,6-dimethylaminomethylphenol, Organophosphine oder Lewis-Basen oder -Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtanteil von 0,001 bis 15 Gew.-%.

Als Thixotropiermittel können übliche Rheologiehilfsmittel verwendet werden, wie pyrogene Kieselsäure. Sie können z.B. in einem Gewichtsanteil von 0,001 bis 50 Gew.-%, beispielsweise von 1 bis 20 Gew.-%, zugesetzt werden.

Als weitere Füllstoffe können ferner Füllstoffe wie oben für die Urethanmethacrylatharze erwähnt Verwendung finden.

Auch weitere Additive können zugesetzt oder beinhaltet sein, wie Weichmacher, nicht reaktive Verdünnungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. (Rest-)Wassergehalte sind hier ebenfalls nicht ausgeschlossen. Auch können weitere Stoffe während der Lagerung hinzutreten, wie z.B. Gase oder insbesondere Stoffe im gasförmigen Aggregatzustand. Derartige weitere Zusätze können vorzugsweise insgesamt in Gewichtsanteilen von insgesamt 0 bis 90 %, beispielsweise von 0 bis 40 Gew.-%, zugesetzt sein.

Bestimmte der bei der Definition der Epoxide genannten Verbindungen, wie Trimethylolpropantriglycidylether oder Hexandioldiglycidylether, die eine geringere Viskosität als aromatisehe Gruppen enthaltende Epoxide aufweisen, können auch als reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%.

Möglich sind auch Gemische von zwei oder mehr solcher Reaktivverdünner, gleicher oder gegebenenfalls auch unterschiedlicher Epoxid-Funktionalität.

Der Härter beinhaltet mindestens eine zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, mit anderen Worten, die komplette Härterkomponente. Der Härter kann als separate Komponente und/oder (insbesondere in geschützter Form, d.h. z.B. in mikroverkapselter Form) auch in der Reaktionsharzformulierung (als einer härtbaren Komponente, d.h. einer solchen, die nach Mischung mit dem Härter nach Aufbrechen der Hülle der Mikrokapsel durch Polymerisation aushärtet) eingearbeitet sein. Übliche Zusätze können zugesetzt sein, wie z.B. Füllstoffe (insbesondere wie oben definiert) und/oder (insbesondere zur Herstellung einer Paste oder Emulsion) Lösungsmittel, wie Benzylalkohol und/oder Wasser, wobei Wasser als Reaktionspartner für die Hydrolyse von hydrolysierbare

Gruppen beinhaltenden Silane oder Siloxanen dienen kann und vorzugsweise nur enthalten ist, wenn die Härterkomponente ansonsten frei von Silanen oder Siloxanen ist. Die weiteren Zusätze der Härterkomponente eines erfindungsgemäßen Befestigungskunstmörtelsystems auf Epoxidbasis können beispielsweise in einem Gewichtanteil von insgesamt 0,01 bis 70 Gew.-%, z.B. von 1 bis 40 Gew.-% bezogen auf die Härterkomponente vorgesehen sein.

Bei den zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Aminothiole, oder Gemische davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/oder Di- oder Polythiole. Vorzugsweise weisen die zur Epoxidhärtung gebräuchlichen Verbindungen keine Kautschukmodifikation oder andere Schlagzähmodifikatoren (wie beispielsweise aminofunktionalisierte Butadien- oder Butadien-Acrylonitril-Polymere) auf.

Die zur Epoxidhärtung (allgemein) gebräuchlichen Verbindungen umfassen beispielsweise in einer Ausführungsform der Erfindung

- Di- oder Polyamine wie insbesondere aliphatische (wie Ethylendiamin), heteroaliphatische (wie 4,9-Dioxadodecan-1,12-diamin), cycloaliphatische (wie 1,3-Bis(aminomethyl)cyclohexan), cycloheteroaliphatische (wie Aminoethylpiperazin), araliphatische (wie meta-Xylylendiamin) und aromatische Di- oder Polyamine,Amidoamine, Aminaddukte (z.B.: Bucherer-Addukte wie in der Druckschrift EP 0 824 124 offenbart), Polyetherdiamine oder Polyphenyl/Polymethylenpolyamine, Mannich-Basen (insbesondere wie in der Druckschrift WO 2005/090433, vor allem auf den Seiten 3, letzter, bis S. 6, 2. Absatz offenbart, wie in Beispiel 1 oder insbesondere 2 davon, oder wie in der Druckschrift EP 0 645 408 oder insbesondere solcher auf Basis von bestimmten Aminen und styrolisierter Phenole oder deren Vorstufen in Form von Mischungen von styrolisierten Phenolen mit niedermolekularen Aminen, die in der deutschen Patentanmeldung DE 10 2013 113 465.3, auch als WO 2014/090382 veröffentlicht, offenbart, die hier diesbezüglich durch Bezugnahme aufgenommen werden, d.h. den elektrophilen Substitutionsprodukten von Phenolen (beispielsweise Phenol, Brenzcatechin, Resorcin, Hydrochinon, Hydroxyhydrochinon, Phloroglucin, Pyrogallol, o-Kresol, m-Kresol oder p-Kresol, insbesondere Phenol) mit Styrol oder Styrolanalogen, wie Vinyltoluol, Divinylbenzol oder 4-Vinylpyridin, insbesondere mit Styrol, z.B. styrolisiertes Phenol, styrolisiertes Resorcin, styrolisiertes Bisohenol-A oder sryrolisiertes Bisphenol-F; alleine oder im Gemisch mit ein oder mehreren weiteren Di- oder Polyaminen), Polyamide und dergleichen; - Di- oder Polythiole; wie z.B. ethoxylierte und/oder propoxylierte Alkohole aus Mono-, Di-, Tri-, Tetra-, Pentaolen und/oder anderen Polyolen mit Thiolendgruppen (z.B. Capcure 3-800 der Firma Cognis) und/oder wie insbesondere Estergruppen beinhaltenden Thiolen. Beispielsweise kann es sich um Ester von $\alpha$-Mercaptoacetat oder $\beta$-Mercaptopropionat mit Diolen, Triolen, Tetraolen, Pentaolen oder anderen Polyolen handeln.

"Aliphatisch" kann dabei beispielsweise 1 bis 20 Kettenatome (Kohlenstoff oder (z.B. 1 bis 3) Heteroatome unabhängig voneinander ausgewählt aus O, S und N) bedeuten.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen, vorzugsweise in Mengen von bis zu 95 Gew.-%, vorzugsweise von 2 bis 70 Gew.-%, beispielsweise von 10 bis 50 % vor.

Bezogen auf die Härterkomponente liegt der Anteil dieser Verbindungen in einer möglichen bevorzugten Ausführungsform der Erfindung bei 1 bis 100 Gew.-%, beispielsweise bei 3 bis 95 Gew.-%, z.B. 4 bis 95 Gew.-%, 5 bis 90 Gew.-% oder 10 bis 80 Gew.-%.

(iii) Unter radikalisch härtenden (oder härtbaren) ungesättigten Reaktiv-Kunstharzen sind in erster Linie solche zu verstehen, die als radikalisch aushärtende (was "(z.B. vor Härterzugabe) aushärtbar einschließt) Bestandteile organische Verbindungen mit ungesättigten (z.B. olefinischen) Resten beinhalten oder insbesondere daraus bestehen, insbesondere solche, die härtbare Ester mit ungesättigten Carbonsäureresten umfassen; z.B. insbesondere (Meth)Acrylat- oder (Meth)Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxypropyl(meth)acrylat, Hydroxyethyl(meth)acrylat, Ethylenglykoldi(meth)acrylat, Butandioldi(meth)acrylat, Hexandioldimethacrylat, besonders bevorzugt Oligoalkylenglykol-di(meth)acrylate wie oben beschrieben oder in DE 10 2014 109355.0 (insbesondere wie oben unter Formel I erwähnt) beschrieben oder (vorzugsweise jeweils propoxyliertem oder insbesondere ethoxyliertem) aromatischem Diol-, wie Bisphenol-A-, Bisphenol-F- oder Novolak-(insbesondere di-) (meth)acrylat), Epoxy(meth)acrylate (insbesondere in Form von Umsetzungsprodukten von Di- oder Polyepoxiden, z.B. Bisphenol-A-, Bisphenol-F- oder Novolak-di- und/ oder-poly-glycidylethern, mit ungesättigten Carbonsäuren, z.B. $C_2$-$C_7$-Alkencarbonsäuren, wie insbesondere (Meth)acrylsäure), Urethan- und/oder Harnstoff-(meth)acrylate (was, wie dem Fachmann bekannt, auch vorverlängerte und/oder oligomere Urethan- und/oder Harnstoff(meth)acrylate umfasst), und/oder ungesättigte Polyesterharze, oder dergleichen; oder ein Gemisch von zwei oder mehr dieser härtbaren ungesättigten organischen Bestandteilen.

Beispiele für in besonderen Ausführungsformen der Erfindung vorhandene bzw. verwendete Epoxy(meth)acrylate sind solche der Formel

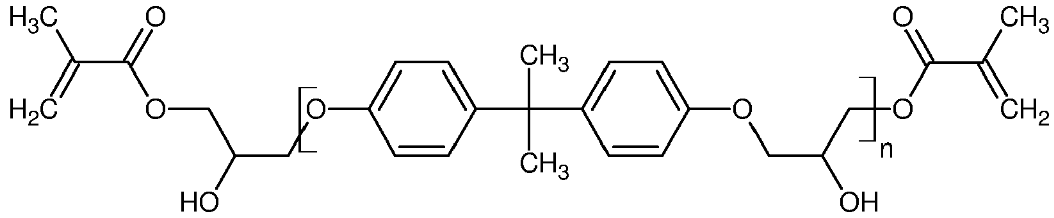

worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak-(insbesondere di-)(meth)acrylate sind solche der Formel

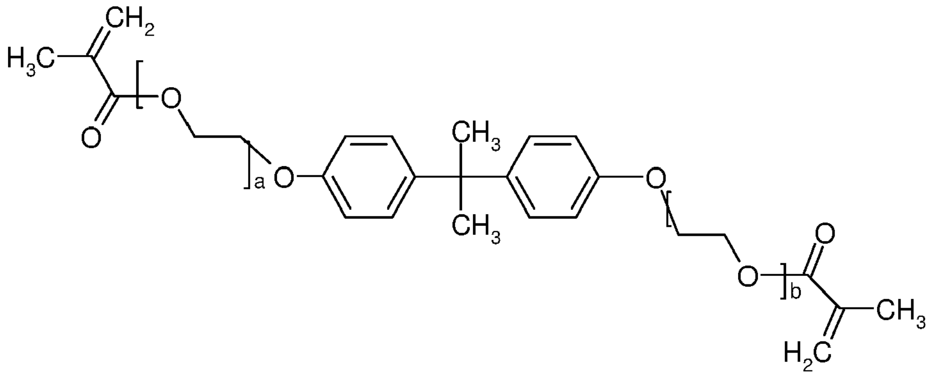

worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich).

Wichtige Beispiele für weitere Inhaltsstoffe sind hier aminische Beschleuniger, Inhibitoren, nicht reaktive oder weitere (außer den biogenen) reaktive Verdünner, Thixotropiermittel, weitere als die erfindungsgemäßen Füllstoffe und/oder weitere Additive.

Als reaktive oder nicht reaktive Verdünner, Beschleuniger, Inhibitoren, Thixotropiermittel, Additive, Füllstoffe oder weitere Füllstoffe und weitere Inhaltsstoffe kommen alle bereits unter (i) genannten in Frage.

Der Härter für Reaktiv-Kunstharze gemäß (i) und (iii) beinhaltet mindestens ein Peroxid als eigentlichen Initiator. Der Begriff "Härter" bedeutet dabei hier vorzugsweise vor- und nachstehend reine Initiatoren oder phlegmatisierte Initiatoren mit oder ohne Füllstoffzusatz und/oder weitere Zusätze, wie Wasser, Verdickungs-mittel und/oder weitere Zusatzstoffe, wie Farbstoffe, Pigmente, Additive und dergleichen, mit anderen Worten, die komplette Härterkomponente. Zur Phlegmatisierung können übliche Zusätze, wie Gips, Kreide, pyrogene (vorzugsweise oberflächenbehandelte, wie hydrophobisierte) Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel (nicht reaktive Verdünner, wie z.B. flüssige (z.B. epoxidierte oder hydroxylgruppenhaltige) Öle, z.B. Rizinusöl, oder Wasser, Verdickungsmittel, Füllstoffe (wie z.B. oben genannte) und weitere der oben genannten Zusätze zugesetzt sein. Der Anteil aller Zusätze kann beispielsweise bei einem Gewichtsanteil von insgesamt 0,1 bis 99,5 Gew.-%, z.B. von 1 bis 99,5 Gew.-%, liegen.

Als Initiator für die Härtung der erfindungsgemäßen Reaktionsharzformulierungen finden im Falle der radikalischen Polymerisation z.B. radikalbildende Peroxide, z.B. organische Peroxide, wie Diacylperoxide, z.B. Dibenzoylperoxid, Ketonperoxide, wie Methylethylketon-peroxid oder Cyclohexanonperoxid, oder Alkylperester, wie tert-Butylperbenzoat, anorganische Peroxide, wie Persulfate oder Perborate, sowie Mischungen davon Verwendung.

Alternativ kann für die Härtung der erfindungsgemäßen Befestigungskunstmörtelsysteme ein Härtersystem vewendet werden, welches die Bestandteile:

a) mindestens einen Aktivator in Form eines Metallsalzes
b) als Radikalkettenstarter mindestens eine Thiol- und/oder Thiolester-Gruppen beinhaltende Verbindung,

als Initiatoren beinhaltet. Durch die Kombination bzw. das Mischen der beiden Bestandteile können Radikale gebildet werden, welche anstelle von bisher üblichen Radikalbildnern (z.B. Peroxiden) eine Polymerisation von nichtaromatischen

Doppelbindungen, z.B. olefinischen Doppelbindungen, beispielsweise Acrylaten oder Methacrylaten, auslösen können. Es sei hier auf die Patentanmeldung DE 10 2013 114 061.0 vom 16.12.2013 verwiesen, die hier diesbezüglich durch Bezugnahme aufgenommen wird.

Ebenfalls alternativ kann als Härtersystem eines verwendet werden bzw. vorgesehen sein, welches als Initiator die folgenden Bestandteile beinhaltet:

a) mindestens einen Aktivator in Form eines Metallsalzes und
b) als Radikalkettenstarter mindestens eine CH-acide Verbindung der Formel I beinhaltet,

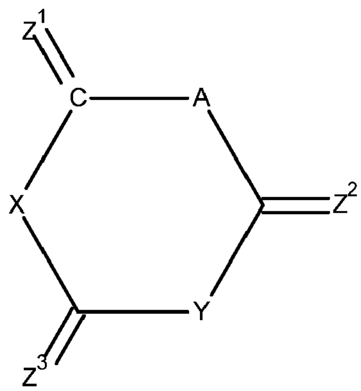

(I)

worin

(i)

-A- für $-C(R^1)(R^2)-$ steht
-X- für eine Bindung, für $-NR^3-$ oder für $-(CR^4R^5)_p-$ steht, oder für -O- steht,
Y für $NR^6$ oder für $(CR^7R^8)_q$ steht, oder für O steht,
wobei wenn X für O steht auch Y für O steht;
wobei vorzugsweise X für $(CR^4R^5)_p$ steht und Y für $CR^7R^8$ steht,
oder X für $NR^3$ und Y für $NR^6$ steht;

$Z^1$ für O, S, S=O oder $S(=O)_2$ steht,
$Z^2$ für O, S, S=O oder $S(=O)_2$ steht,
$Z^3$ für O, S, S=O oder $S(=O)_2$ oder für $R^9$ und $R^{10}$ steht,

p für 1, 2 oder 3 steht, vorzugsweise für 1 oder 2
q für 1, 2 oder 3 steht, vorzugsweise für 1;

und die Reste $R^1$, $R^2$, $R^3$, $R^4$, $R^5$, $R^6$, $R^7$ $R^8$, $R^9$ und $R^{10}$ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen; vorzugsweise ausgewählt aus O, N, wie NH oder N-Alkyl, und S) aufweisen, mit der Maßgabe, dass mindestens einer der Reste $R^1$ und $R^2$ Wasserstoff bedeutet,
oder

(ii) offenkettige Verbindungen,
worin das die Brücke bildende Glied $-C(=Z^3)-$ fehlt,
-A- für $-C(R^1)(R^2)-$ steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder $C_1$-$C_4$-Alkoxycarbonylmethylgruppe oder $C_1$-$C_4$-Alkylcarbonylmethylgruppe stehen,
$R^1$ und $R^2$ beide Wasserstoff bedeuten und
$Z^1$ und $Z^2$ die genannten Bedeutungen haben;
oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende

$C_1$-$C_4$-Alkylgruppe oder $C_1$-$C_4$-Alkoxygruppe oder $C_1$-$C_4$-Alkoxycarbonylmethylgruppe oder $C_1$-$C_4$-Alkylcarbonylmethylgruppe steht,
Y und $Z^2$ gemeinsam mit dem bindenden Kohlenstoffatom -CN bedeuten,
$Z^1$ die oben genannten Bedeutungen hat, und
$R^1$ und $R^2$ jeweils wie oben definiert sind mit der Maßgabe, dass mindestens einer der Reste Wasserstoff bedeutet;

und/oder Salze davon. Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder 2-Thiobarbitursäure (4,6-Dihydroxy-2-Mercaptopyrimidin), 1 ,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen. Es sei hier auf die deutsche Patentanmeldung DE 10 2014 105 202.1 vom 11.04.2014 verwiesen, die diesbezüglich durch Bezugnahme aufgenommen wird.

Das genannte Härtersystem kann als fertige Härterzusammensetzung (beispielsweise mit mikroverkapselten Komponenten a) und b) vorliegen oder vorzugsweise erst bei der Mischung mit weiteren Komponenten einer Kunstharzzusammensetzung (gewissermaßen als Zusammensetzung (Mischung)) ausgeformt werden, beispielsweise bei der Verwendung.

Bezogen auf die Härterkomponente liegt der Anteil des Initiators (eigentlicher Härter) hier in einer möglichen bevorzugten Ausführungsform der Erfindung bei 0,5 bis 90 Gew.-%, insbesondere bei 0,9 bis 30 Gew.-%.

Der Anteil des Härters an einem erfindungsgemäßen Kunstharzbefestigungsmörtel liegt dabei vorzugsweise, bezogen auf die Masse (Gewicht) aller Reaktanden und Zusätze ohne Verpackung, in einem Bereich von 1 bis 60 Gew.-%, z.B. 2 bis 50 Gew.-%, wobei der Anteil an Per¬oxid, ebenfalls bezogen auf die Masse der gesamten zugehörigen Reaktionsharzformulierung (100 %), bei 0,1 oder mehr Gew.-%, in einer besonders bevorzugten Ausführungsform bei 0,1 bis < 1 Gew.-%, ferner auch bei 1 bis 10 Gew.-%, liegen kann.

Das radikalisch härtbare ungesättigte Reaktivharz (bzw. die Gesamtmenge seiner Komponenten) ist beispielsweise in einem Gewichtsanteil von 5 bis 99,5 %, wie etwa von 10 bis 98,5, z.B. 10 bis 89,5 %, vorgesehen.

"Auf Basis" bedeutet auch hier, dass die erfindungsgemäßen Befestigungskunstmörtelsysteme neben den genannten Komponenten auch weitere übliche Inhaltsstoffe (z.B. Additive oder andere wie oben oder unten genannte Bestandteile) beinhalten können. Diese weiteren Inhaltsstoffe können zusammen beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Als nicht reaktive Verdünner können in allen vorstehend beschrieben Reaktiv-Kunstharzen beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-%.

Alkyl (auch in alkylen oder Aralkyl oder Cycloalkylalkyl) steht innerhalb dieser Offenbarung insbesondere für einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl. "Niederalkyl" bedeutet Alkyl mit 1 bis 7, vorzugsweise 1 bis 4 Kohlenstoffatomen.

Cycloalkyl (auch in Cycloalkylalkyl) steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Aryl (auch in Arylalkyl, Aralkyl) steht für einen mono-, di- oder trizyklischen, vorzugsweise monozyklischen, ungesättigten cyclischen Kohlenwasserstoffrest, wie insbesondere für Phenyl oder Naphthyl, wobei Aryl unsubstituiert oder substituiert sein kann, beispielsweise durch ein oder mehrere, z.B. bis zu drei, $C_1$-$C_7$-Alkylreste.

Unter einem Loch oder Spalt ist ein solches Loch oder Spalt zu verstehen, das in einem Bausubstrat vorhanden und von der Außenseite her zugänglich ist, beispielsweise ein Bohrloch oder ein beim Mörteln mit Zement oder Gips ausgesparter Bereich oder dergleichen.

In einer besonderen Ausführungsform der Erfindung sind das oder die Reaktiv-Kunstharze (z.B. als Komponente A) und der Härter (z.B. als Komponente B) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Insbesondere handelt es sich um Zwei-Komponentensysteme, in denen das Gewichts-verhältnis von Komponente A zu Komponente B bei 99 : 1 bis 1 : 99, bei 99 : 1 bis 50 : 50, bei 99 : 1 bis 60 : 40 oder bei 99 : 1 bis 70 : 30 liegt.

Komponenten, die sonst unerwünscht miteinander reagieren würden, wie Wasser und die hydrolysierbaren Gruppen der erfindungsgemäß zu verwendenden Silane oder Wasser und Zement, sind dabei vorzugsweise vor dem

Einsatz im Loch oder Spalt voneinander getrennt zu halten.

Beispielsweise beinhaltet daher eine Komponente (A) eines solchen Zwei- oder ferner Mehrkomponentensystems das oder die Reaktiv-Kunstharze, während die Komponente (B) den Härter beinhaltet. Die Silane können unabhängig als eine dritte Komponente vorgesehen sein, oder sie sind Bestandteil der Reaktivkunstharz- und/oder Härterkomponenten. In allen Fällen sind die Komponenten, in denen Silane vorhanden sind, von Wasser weitgehend frei zu halten (z.B. weniger als 0,1 %, insbesondere weniger als 0,05 Gew.-% Wasser bezogen auf das Gesamtgewicht der jeweiligen Komponente), um keine unerwünschte Hydrolyse und Vernetzung mittels der Si-gebundenen hydrolysierbaren Gruppen zu verursachen, oder die Silane und das Wasser sind (beispielsweise durch Mikroverkapselung) voneinander getrennt zu halten. Alternativ können die Silane auch in oligomerisierter Form vorliegen (beispielsweise durch Reaktion mit vorhandenem Wasser während der Lagerung entstanden oder vorher hergestellt, z.B. nach oder analog der in DE 10 2011 086 862 A1 gezeigten Methoden aus den oben genannten (mindestens im Wesentlichen monomeren) Silanen.

Die erfindungsgemäßen Injektions-Kunstharzsysteme können folglich als Ein- (wenn ansonsten mit weiteren vorhandenen Komponenten reaktive Komponenten, z.B. der Härter geschützt, beispielsweise eingekapselt sind) oder vorzugsweise Mehr-Komponentensysteme (Mehrkomponentenkit) vorgesehen sein und auch verwendet werden.

Unter einem Mehrkomponentenkit ist insbesondere ein Zwei- oder Mehrkomponentenkit (vorzugsweise ein Zweikomponentenkit) mit einer Komponente (A), welche ein mehrere Reaktiv-Kunstharze beinhaltet, wie oben und unten beschrieben, und Härter (Komponente (B)), wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen , beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Befestigungsmörtels mit oben und nachstehend genannten Zusammensetzungen zur Aufbewahrung vor der Nutzung enthalten sind, wobei vorzugsweise auch ein Statikmischer zum entsprechenden Kit gehört.

Die Verwendung eines erfindungsgemäßen Befestigungsmörtels am gewünschten Einsatzort erfolgt durch Mischen der zugehörigen Komponenten, insbesondere nahe bei oder direkt vor einem Loch oder (beispielsweise insbesondere bei Verwendung von Statikmischern oder beim Zerschlagen entsprechender Patronen) innerhalb eines Loches oder Spaltes, z.B. einem Bohrloch.

Unter "Einmörteln" ist insbesondere eine (stoff- und/oder formschlüssige) Befestigung von Verankerungselementen aus Metall (z.B. Hinterschneidanker, Gewindestangen, Schrauben, Bohranker, Bolzen) oder ferner einem anderen Material, wie Kunststoff oder Holz, in (festen) Bausubstraten, worunter Beton oder Mauerwerk fallen, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen.

Mittels dieser Verankerungselemente können dann beispielsweise Geländer, Abdeckungselemente, wie Platten, Fassaden oder andere Bauelemente befestigt werden.

Die Einbringung des oder der Verankerungselemente(s) erfolgt vorzugsweise bereits kurze Zeit, vorzugsweise 30 Minuten oder weniger, nach dem Mischen der Komponenten des erfindungsgemäßen Befestigungskunstmörtelsystems. Zur Erläuterung: Mit der Mischung und Einbringung der Komponenten auf oder in die gewünschten Stellen, an denen Verankerungselemente befestigt werden sollen, insbesondere Löcher, wie Bohrlöcher, beginnen mehrere, im wesentlichen parallel und/oder nur mit geringer zeitlicher Versetzung ablaufende Reaktionen, insbesondere die Polymerisation. Die endgültige Aushärtung erfolgt in situ.

Bevorzugte Ausführungsformen der Erfindung finden sich auch in Ansprüchen (insbesondere den Unteransprüchen), welche hier durch Bezugnahme aufgenommen werden, wie auch in den Beispielen.

Figur 1 (Fig. 1) zeigt die Abhängigkeit der Verbundspannung vom Mittelkorn der verwendeten Teilchen aus Beispiel 1.

Die nachfolgenden Beispiele dienen der Illustration der Erfindung, ohne ihren Umfang einzuschränken.

Beispiel 1: Erfindunasaemäße und Veraleichs-2-Komponenten-Befestiaunaskunstmörtel-systeme

Unter Verwendung des nach Beispiel 2 hergestellten Urethanmethacrylatharzes wurden jeweils folgende 2

Komponenten für erfindungsgemäße 2-Komponenten-Befestigungskunstmörtelsysteme hergestellt:

| **Kunstharzkomponente** | |
|---|---|
| Rohstoff | Anteil [%] |
| Urethan methacrylatharz | 35,5 |
| Methacryloxypropyltrimethoxysilan | 6 |
| Inhibitorenmischung (ausgewählt aus t-BBC, Hydrochinon und/oder Tempol) | 0,06 |
| Aminbeschleuniger | 0,5 |
| Füllstoff | 56 |
| pyrogene Kieselsäure | 1,94 |
| Gesamt | 100 |
| | |
| **Härter** | |
| Rohstoff | Anteil [%] |
| Wasser demineralisiert | 30 |
| phlegmatisiertes Dibenzoylperoxid (33 %) | 42 |
| Quarzsand | 26,5 |
| Additive und Verdicker | 1,5 |
| | |
| Gesamt | 100 |

Für "Füllstoff" werden Quarze, $\alpha$-Aluminiumoxide, Gipse, Kreiden und Aluminiumhydroxide in den genannten Feinheiten in den jeweiligen Rezepturen eingesetzt.

Die Kunstharzkomponente und der Härter werden in handelsübliche Kartuschen mit einem Mischungsverhältnis von 5:1 abgefüllt.

Es wurden folgende Messergebnisse erhalten:

| Füllstoff | Mittlerer Teilchendurchmesser d50 | | Verbundspannung | Zugfestigkeit | | | Druckfestigkeit | | |
|---|---|---|---|---|---|---|---|---|---|
| | | | | σB | E | εB | σD | E | εD |
| | [µm] | | [N/mm²] | MPa | GPa | % | MPa | GPa | % |
| Quarz | 400 | | 27,3 | 7,9 | 3,1 | 0,3 | 38 | 1,1 | 4,5 |
| Quarz | 180 | | 26,0 | 10,1 | 3,7 | 0,3 | 45,1 | 1,5 | 4,5 |
| Quarz | 100 | | 27,0 | 12 | 3,5 | 0,4 | 37,8 | 1,1 | 4,8 |
| Quarz | 90 | | 27,1 | 12,5 | 3,8 | 0,3 | 58,9 | 1,5 | 6,8 |
| Quarz | 40 | | 28,7 | 13,4 | 4 | 0,4 | 63 | 1,1 | 7,4 |
| Quarz | 30 | | 29,0 | 15,7 | 4 | 0,4 | 76,6 | 1,4 | 7,4 |
| Quarz | 20 | | 28,3 | 17,5 | 4,3 | 0,5 | 86 | 1,8 | 7,5 |
| Quarz | 17 | | 30,2 | 19,5 | 4 | 0,5 | 94,8 | 1,8 | 8,1 |
| Quarz | 5 | | 29,3 | 20 | 4,1 | 0,5 | 90 | 1,7 | 7,7 |
| Quarz | 4 | | 29,6 | 14,9 | 4,2 | 0,4 | 88,8 | 1,8 | 7,3 |
| Aluminiumoxid | 75 | | 25,4 | | | | | | |
| Aluminiumoxid | 1,77 | | 29,9 | | | | | | |
| Aluminiumoxid | 1,69 | | 32,4 | | | | | | |
| Aluminiumoxid | 0,8 | | 29,2 | | | | | | |
| Aluminiumhydroxid* | 22,4 | | 24,6 | | | | | | |
| Calciumcarbonat* | 6 | | 26,2 | | | | | | |
| Gips* | 125 | | 27,1 | | | | | | |
| Calciumcarbonat* | 9 | | 27,1 | | | | | | |
| Calciumcarbonat* | 60 | | 27 | | | | | | |

*) Vergleichsversuche ohne Größeneffekt.
σ steht für Zug- bzw. Druckfestigkeit, ε für die Dehnung bzw. Stauchung bei Bruch.

Die Werte für die Verbundspannung finden sich auch in Fig. 1 in graphischer Darstellung. Die kreisförmigen Symbole stehen für die Materialien ohne Größeneffekt.

Prüfmethoden:

Die Komponenten werden und wurden im vorliegenden Fall mit einer handelsüblichen 2-Kammer-Kartusche mit Statikmischer analog der Leitlinie von der "European Organisation for Technical Approvals" (EOTA) (2001): ETAG N° 001 Ausgabe November 2006, Leitlinie für die europäische technische Zulassung für Metalldübel zur Verankerung im Beton, Teil 5: Verbunddübel, April 2013 beschriebenen Bedingungen einem Adhäsionsversagenstest unterzogen und der Mittelwert der Adhäsionsversagenslast aus 5 Versuchen für M12 Bolzen bei einer Verankerungstiefe von 75 mm ermittelt (Bohrlochreinigung 2x Ausblasen, 2x Bürsten, 2x Ausblasen, Aushärtezeit 24 h bei 23 °C).

Die Zugfestigkeit wird und wurde bestimmt an Schulterstäben des Probekörpertyps 1 BA gemäß DIN EN ISO 527, die Druckfestigkeit wird gemessen nach DIN EN ISO 604 jeweils nach 24 h Aushärtezeit bei 23 °C.

Beispiel 2: (A) Herstellung eines Urethanmethacrylat-Harzes:

In einem 1000-ml-Glaskolben mit Rückflusskühler mit Trockenrohr, Rührer, Tropftrichter und Thermometer wurden 191 g HPMA, 174 g BDDMA, 2,15 g einer Mischung von Stabilisatoren und Katalysatoren gelöst in BDDMA vorgelegt und im Ölbad auf 60 °C aufgeheizt. 132 g PMDI (mittlere Funktionalität = ca. 2,9) wurden so langsam zur Reaktionsmischung zugetropft, dass die Temperatur nicht über 90 °C stieg. Nach vollständiger Zugabe des PMDIs wurde noch 30 min bei 80 °C gerührt, um die Reaktion zu vervollständigen. Die vollständige Umsetzung (Freiheit von durch IR-Spektroskopie nachweisbaren Isocyanatgruppen) wurde mittels FT-IR überprüft.

PMDI: Diphenylmethandiisocyanat mit Isomeren und höherfunktionellen Homologen, Molekulargewicht 430 g/mol, Funktionalität 3,2 (Herstellerangaben)

BDDMA: 1,4-Butandiol-dimethacrylat (technisches Produkt)

Beispiel 3: Beispiel für Epoxidharzzusammensetzung

| **Kunstharzkomponente** | |
|---|---|
| Rohstoff | Anteil [%] |
| Bisphenol-A/F-Harz | 45 |
| Trimethylolpropantriglycidylether | 15 |
| Netz- und Dispergiermittel | 2 |
| Pigment | 0,5 |
| $\alpha$-Aluminiumoxid d50 = 1,69 $\mu$m | 35,5 |
| pyrogene oberflächenbehandelte Kieselsäure | 2 |
| Gesamt | 100 |
| | |
| **Härter** | |
| Rohstoff | Anteil [%] |
| Mannichbasenformulierung | 60 |
| $\alpha$-Aluminiumoxid d50 = 1,69 $\mu$m | 36,5 |
| pyrogene oberflächenbehandelte Kieselsäure | 2 |
| Additive und Pigmente | 1,5 |
| | |
| Gesamt | 100 |

Die Komponenten wurden in eine 3:1-Kartusche abgefüllt und gegen das Produkt FIS EM 390 S der Fa. fischerwerke GmbH & Co. KG getestet. Hierbei konnte die Verbundspannung um mehr als 10 % gesteigert werden.

## Patentansprüche

1. Mehrkomponentiges Befestigungskunstmörtelsystem, insbesondere zum Befestigen von Verankerungselementen in Bausubstraten, welches in einer Komponente Reaktiv-Kunstharze auf (i) Urethan(meth)acrylatbasis, (ii) Epoxidharzbasis oder (iii) auf Basis radikalisch härtender (bzw. härtbarer) ungesättigter Reaktiv-Harze, in einer weiteren Komponente Härter und mindestens einen Füllstoff ausgewählt aus Oxiden von Silicium und Aluminium, oder Mischoxiden mit Gegenwart weiterer Kationen, dessen Mittelkorn d50 bei 50 μm oder weniger liegt, beinhaltet.

2. Mehrkomponentiges Befestigungskunstmörtelsystem nach Anspruch 1, wobei die Füllstoffe aus den genannten außer Mischoxiden ausgewählt sind.

3. Befestigungskunstmörtelsystem nach Anspruch 1 oder 2, **dadurch gekennzeichnet, dass** der mindestens eine Füllstoff ein Mittelkorn d50 von 40 μm oder weniger, vorteilhaft bei 20 μm oder weniger, aufweist.

4. Befestigungskunstmörtelsystem nach einem der Ansprüche 1 bis 3, **dadurch gekennzeichnet, dass** der mindestens eine Füllstoff ein Mittelkorn von 10 μm oder weniger, stark vorzugsweise von 5 μm oder weniger, in erster Linie von 2,5 μm oder weniger, in allererster Linie von 1 μm oder weniger, aufweist.

5. Befestigungskunstmörtelsystem nach einem der Ansprüche 1 bis 4, **dadurch gekennzeichnet, dass** der mindestens eine Füllstoff aus der Gruppe bestehend aus Siliciumdioxid, Aluminiumoxid oder Mischoxiden hiervon in zusätzlicher Gegenwart von ein oder mehreren Oxiden ausgewählt aus Oxiden der Gruppe von Metallen, die insbesondere aus Calcium, Titan, Eisen, Natrium oder dergleichen besteht, ausgewählt ist, insbesondere aus Quarz, Silikaten, oder Aluminiumoxid, insbesondere α-Aluminiumoxid.

6. Befestigungskunstmörtelsystem nach einem der Ansprüche 1 bis 5, **dadurch gekennzeichnet, dass** es als weiteren Zusatz mindestens ein mindestens eine Si-gebundene hydrolysierbare Gruppe beinhaltendes Silan, beinhaltet, oder der Füllstoff in mit einem derartigen Silan modifizierter Form vorliegt.

7. Befestigungskunstmörtelsystem nach Anspruch 6, **dadurch gekennzeichnet, dass** als Silan 3-(Meth)acryloyl-oxypropyltrialkoxysilan, wie 3-(Meth)acryloyl-oxypropyltrimethoxysilan oder -triethoxysilan oder 3-(Meth)acryloyl-oxymethyltrimethoxysilan oder -triethoxysilan, 3-(Meth)acryloyl-oxypropylmethyldimethoxysilan, Alkenylalkoxysilan, wie Vinyltrimethoxysilan oder Vinyltriethoxysilan, und/ oder Tetraalkoxysilan, wie Tetraethoxysilan, Tetramethoxysilan oder Tetrapropoxysilan, oder eine Mischung von zwei oder mehr davon, vorliegt, und/oder der Füllstoff damit oberflächenmodifiziert ist.

8. Befestigungskunstmörtelsystem nach einem der Ansprüche 1 bis 7, **dadurch gekennzeichnet, dass** als Reaktiv-Kunstharz eines auf (ii) Epoxidharzbasis oder insbesondere (iii) auf Basis radikalisch härtender (bzw. härtbarer) ungesättigter Reaktiv-Harze eingesetzt wird.

9. Befestigungskunstmörtelsystem nacheinem der Ansprüche 1 bis 7, **dadurch gekennzeichnet, dass** als Reaktiv-Kunstharz eines auf Urethan(meth)acrylatbasis vorliegt.

10. Befestigungskunstmörtelsystem nach Anspruch 9, **dadurch gekennzeichnet, dass** das Reaktiv-Kunstharz auf Urethan(meth)acrylatbasis aus der Umsetzung eines vorverlängerten monomeren Di- oder Polyisocyanats und/oder aus der Umsetzung eines polymeren Di- oder Polyisocyanats mit Hydroxyethyl- oder Hydroxypropyl(meth)acrylat resultierte.

11. Befestigungskunstmörtelsystem nach einem der Ansprüche 1 bis 10 in Form eines Zwei-Komponenten-Systems.

12. Verwendung eines Befestigungsmörtelsystems nach einem der Ansprüche 1 bis 11 zum Befestigen von Verankerungselementen in einem Loch oder Spalt in einem Bausubstrat.

13. Verfahren zur Befestigung von einem Verankerungselement in einem Loch oder Spalt in einem Bausubstrat, bei dem ein mehrkomponentiges Befestigungskunstmörtelsystem nach einem der Ansprüche 1 bis 11 und ein Verankerungselement in das Loch oder den Spalt eingebracht und aushärten lassen werden.

**14.** Verwendung von mindestens einem Füllstoff ausgewählt aus Oxiden von Silicium und Aluminium, oder Mischoxiden mit Gegenwart weiterer Kationen, dessen Mittelkorn d50 bei 50 μm oder weniger, insbesondere bei 40 μm oder weniger, vorzugsweise bei 30 μm oder weniger, vorteilhaft bei 25 μm oder weniger, z.B. vorzugsweise bei 20 μm oder weniger, stark vorzugsweise bei 10 μm oder weniger, in erster Linie von 5 μm oder weniger, in allererster Linie von 1 μm oder weniger, liegt, als Füllstoffe in einem mehrkomponentigen Befestigungskunstmörtelsystem wie in einem der Ansprüche 1 bis 11 definiert zum Erhöhen der Verbundspannung gegenüber Füllstoffen mit größerem Mittelkorn.

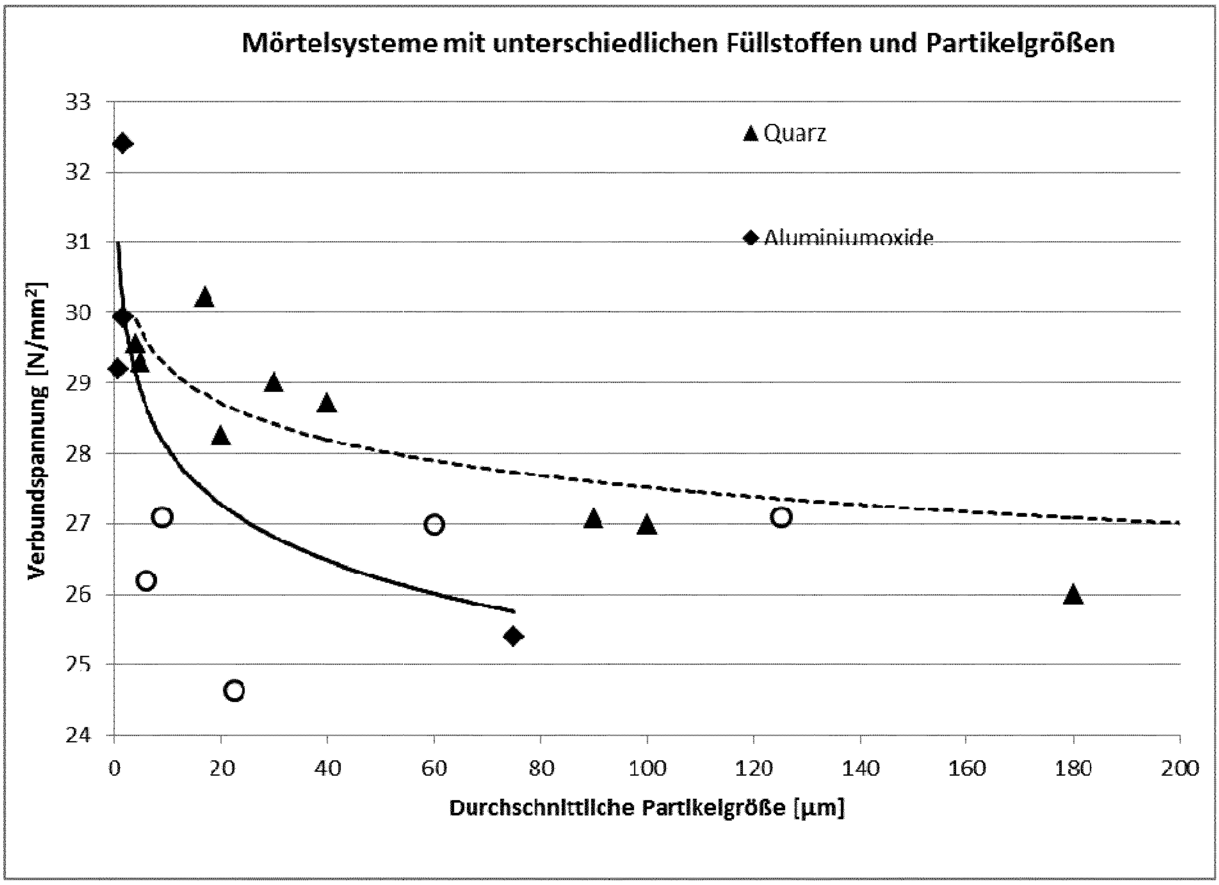


▲ Quarz

◆ Aluminiumoxide

○ nicht erfindungsgemäß (z.B. Calciumcarbonat, Aluminiumhydroxid)

FIG. 1

Europäisches Patentamt
European Patent Office
Office européen des brevets

# EUROPÄISCHER RECHERCHENBERICHT

Nummer der Anmeldung
EP 21 15 5567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 10 2013 113465 A1 (FISCHERWERKE GMBH & CO KG [DE]) 12. Juni 2014 (2014-06-12)<br>* Zusammenfassung *<br>* Absatz [0044] - Absatz [0045] *<br>* Ansprüche 1,9,10,13,15,16 *<br>----- | 1 | INV.<br>C04B26/06<br>C04B40/06<br>C04B26/10<br>C04B26/14<br>C09J4/00<br>C09J4/06<br>C09J163/00<br>C09J175/00<br><br>ADD.<br>C04B111/00 |
| Y,D<br><br>A | DE 10 2011 078785 A1 (HILTI AG [LI]) 10. Januar 2013 (2013-01-10)<br>* Zusammenfassung *<br>* Absatz [0066] - Absatz [0067] *<br>* Ansprüche 1,12,13,15,21 *<br>----- | 2,5<br><br>1 | |
| A,D | EP 0 432 087 A1 (HILTI AG [LI]) 12. Juni 1991 (1991-06-12)<br>* Zusammenfassung *<br>* Seite 2, Zeile 40 - Zeile 47 *<br>* Seite 3, Zeile 38 - Zeile 41 *<br>* Beispiele 3-5 *<br>* Ansprüche 1-5 *<br>----- | 1 | |
| X<br><br>Y<br>A | DE 10 2010 051818 B3 (HILTI AG [LI]) 16. Februar 2012 (2012-02-16)<br>* Zusammenfassung *<br>* Absatz [0025] - Absatz [0026] *<br>* Absatz [0030] - Absatz [0034] *<br>* Ansprüche 1,3 *<br>----- | 1,3,6-14<br><br>2,5<br>4 | RECHERCHIERTE SACHGEBIETE (IPC)<br>C04B<br>C09J |
| X,P | EP 2 826 796 A1 (HILTI AG [LI]) 21. Januar 2015 (2015-01-21)<br>* Absatz [0010] *<br>* Absatz [0067] - Absatz [0072] *<br>----- | 1-3,8,<br>11,12 | |
| A | EP 2 314 556 A2 (HILTI AG [LI]) 27. April 2011 (2011-04-27)<br>* Zusammenfassung *<br>* Absatz [0027] *<br>-----<br>-/-- | 1 | |

Der vorliegende Recherchenbericht wurde für alle Patentansprüche erstellt

1

| Recherchenort | Abschlußdatum der Recherche | Prüfer |
|---|---|---|
| Den Haag | 29. April 2021 | Kolb, Ulrike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 21 15 5567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2012 221446 A1 (HILTI AG [LI]) 28. Mai 2014 (2014-05-28)<br>* Zusammenfassung *<br>* Absatz [0046] *<br>----- | 1 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| Den Haag | 29. April 2021 | Kolb, Ulrike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 21 15 5567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2021

| Im Recherchenbericht angeführtes Patentdokument | Datum der Veröffentlichung | Mitglied(er) der Patentfamilie | Datum der Veröffentlichung |
|---|---|---|---|
| DE 102013113465 A1 | 12-06-2014 | BR 112015013087 A2 | 11-07-2017 |
| | | CN 104837887 A | 12-08-2015 |
| | | DE 102013113465 A1 | 12-06-2014 |
| | | DE 202013012362 U1 | 21-06-2016 |
| | | DE 202013012732 U1 | 18-12-2018 |
| | | DE 202013012733 U1 | 12-12-2018 |
| | | EP 2931782 A1 | 21-10-2015 |
| | | ES 2615901 T3 | 08-06-2017 |
| | | JP 6395721 B2 | 26-09-2018 |
| | | JP 2016508162 A | 17-03-2016 |
| | | RU 2015128062 A | 16-01-2017 |
| | | US 2015307702 A1 | 29-10-2015 |
| | | US 2016355437 A1 | 08-12-2016 |
| | | WO 2014090382 A1 | 19-06-2014 |
| DE 102011078785 A1 | 10-01-2013 | KEINE | |
| EP 0432087 A1 | 12-06-1991 | AT 111064 T | 15-09-1994 |
| | | AU 620747 B2 | 20-02-1992 |
| | | CA 2031448 A1 | 07-06-1991 |
| | | DE 3940309 A1 | 13-06-1991 |
| | | EP 0432087 A1 | 12-06-1991 |
| | | JP H03177343 A | 01-08-1991 |
| | | US 5531546 A | 02-07-1996 |
| DE 102010051818 B3 | 16-02-2012 | AU 2011331387 A1 | 27-06-2013 |
| | | CA 2817997 A1 | 24-05-2012 |
| | | CN 103339082 A | 02-10-2013 |
| | | DE 102010051818 B3 | 16-02-2012 |
| | | DK 2640675 T3 | 14-12-2015 |
| | | EP 2640675 A1 | 25-09-2013 |
| | | ES 2551903 T3 | 24-11-2015 |
| | | JP 5710777 B2 | 30-04-2015 |
| | | JP 2014503612 A | 13-02-2014 |
| | | PT 2640675 E | 12-11-2015 |
| | | RU 2013127395 A | 27-12-2014 |
| | | US 2013237634 A1 | 12-09-2013 |
| | | WO 2012065878 A1 | 24-05-2012 |
| EP 2826796 A1 | 21-01-2015 | AU 2014292018 A1 | 11-02-2016 |
| | | CA 2918362 A1 | 22-01-2015 |
| | | CN 105377937 A | 02-03-2016 |
| | | EP 2826796 A1 | 21-01-2015 |
| | | EP 2826798 A1 | 21-01-2015 |
| | | EP 3022245 A1 | 25-05-2016 |
| | | EP 3489269 A1 | 29-05-2019 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 21 15 5567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2021

| Im Recherchenbericht angeführtes Patentdokument | Datum der Veröffentlichung | Mitglied(er) der Patentfamilie | Datum der Veröffentlichung |
|---|---|---|---|
| | | ES 2707328 T3 | 03-04-2019 |
| | | ES 2708751 T3 | 11-04-2019 |
| | | HK 1215716 A1 | 09-09-2016 |
| | | JP 2016532742 A | 20-10-2016 |
| | | RU 2016105299 A | 23-08-2017 |
| | | SG 11201600309R A | 26-02-2016 |
| | | US 2016159690 A1 | 09-06-2016 |
| | | WO 2015007879 A1 | 22-01-2015 |
| EP 2314556 A2 | 27-04-2011 | AU 2010224317 A1 | 14-04-2011 |
| | | CN 102030498 A | 27-04-2011 |
| | | DE 102009043792 A1 | 31-03-2011 |
| | | EP 2314556 A2 | 27-04-2011 |
| | | JP 2011074388 A | 14-04-2011 |
| | | US 2011073327 A1 | 31-03-2011 |
| DE 102012221446 A1 | 28-05-2014 | AU 2013349790 A1 | 11-06-2015 |
| | | CA 2892339 A1 | 30-05-2014 |
| | | CN 105102499 A | 25-11-2015 |
| | | DE 102012221446 A1 | 28-05-2014 |
| | | EP 2922890 A1 | 30-09-2015 |
| | | ES 2649992 T3 | 16-01-2018 |
| | | JP 6375305 B2 | 15-08-2018 |
| | | JP 2016501933 A | 21-01-2016 |
| | | NO 2886753 T3 | 24-02-2018 |
| | | RU 2015124102 A | 10-01-2017 |
| | | US 2015252124 A1 | 10-09-2015 |
| | | WO 2014079854 A1 | 30-05-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0150555 B1
- DE 102014109353
- EP 0508183 A1
- EP 0432087 A1
- DE 102014101861
- DE 102013101861
- DE 19956509
- DE 102014109355
- EP 0824124 A
- WO 2005090433 A
- EP 0645408 A
- DE 102013113465
- WO 2014090382 A
- DE 102013114061
- DE 102011078785
- DE 102014105202
- DE 102011086862 A1


### In der Beschreibung aufgeführte Nicht-Patentliteratur


- **VON BECKER, G.W. ; BRAUN, D. ; OERTEL, G.** Polyurethane Kunststoff-Handbuch. Carl Hanser Verlag, 1993, vol. 7
- **VON LEE H ; NEVILLE K.** Handbook of Epoxy Resins. McGraw-Hill, 1982
- **LEE H ; NEVILLE K.** Handbook of Epoxy Resins. McGraw-Hill, 1982